# EUROPÄISCHE PATENTANMELDUNG

(11) **EP 3 955 443 A1**
(43) Veröffentlichungstag der Anmeldung: **16.02.2022**
(21) Anmeldenummer: 20190711.0
(22) Anmeldetag: 12.08.2020
(51) Int. Cl.: H02M 1/32

(54) **FEHLERTOLERANTER BETRIEB EINES STROMRICHTERS**

(71) Anmelder: Siemens Aktiengesellschaft, 80333 München (DE)
(72) Erfinder: Pfeifer, Markus, 90455 Nürnberg (DE)

(57) **Zusammenfassung**

Die Erfindung betrifft ein Verfahren zum Betrieb eines elektronischen Moduls (1) umfassend mindestens drei Halbleiterelemente (S1 bis S6), wobei bei Defekt eines der Halbleiterelemente (S1 bis S6) mittels einer gezielten Ansteuerung von mindestens zweien der übrigen Halbleiterelemente (S1 bis S6) ein Strom über das defekte Halbleiterelement (S1 bis S6) geleitet wird, um das defekte Halbleiterelement (S1 bis S6) oder eine diesem zugeordnete Schwachstelle zu zerstören oder aufzutrennen, wobei dieser Strom auf die gezielt angesteuerten Halbleiterelemente (S1 bis S6) aufgeteilt wird.

## Beschreibung

Die Erfindung betrifft ein Verfahren zum Betrieb eines elektronischen Moduls gemäß Anspruch 1 und eine Vorrichtung, umfassend ein elektronisches Modul.

Elektronische Module, beispielsweise Umrichter, Gleichrichter oder Wechselrichter, mit mehreren Halbleiterelementen, insbesondere Leistungshalbleiterelementen, können bei einem Defekt eines der Halbleiterelemente normalerweise nicht weiterbetrieben werden. Dadurch können erhebliche Ausfallkosten entstehen.

Der Erfindung liegt die Aufgabe zugrunde, ein verbessertes Verfahren zum Betrieb eines elekrtronischen Moduls sowie eine verbesserte Vorrichtung, umfassend ein elektronisches Modul anzugeben.

Die Aufgabe wird erfindungsgemäß gelöst durch ein Verfahren mit den Merkmalen des Anspruchs 1 und durch eine Vorrichtung, mit den Merkmalen des Anspruchs 8.

Vorteilhafte Ausgestaltungen der Erfindung sind Gegenstand der Unteransprüche.

Bei einem erfindungsgemäßen Verfahren zum Betrieb eines elektronischen Moduls, umfassend mindestens drei Halbleiterelemente, wird bei Defekt eines der Halbleiterelemente mittels einer gezielten Ansteuerung von mindestens zweien der übrigen Halbleiterelemente ein Strom über das defekte Halbleiterelement geleitet, um das defekte Halbleiterelement oder eine diesem zugeordnete Schwachstelle zu zerstören oder aufzutrennen, wobei dieser Strom auf die gezielt angesteuerten Halbleiterelemente aufgeteilt wird.

Mit dem so unterbrochenen Halbleiterelement kann das Modul zunächst weiterbetrieben werden, gegebenenfalls nicht mit voller Leistung, da nicht alle Schaltmuster geschaltet werden können. Ein Teillastbetrieb bleibt jedoch möglich.

Die Halbleiterelemente können beispielsweise als Halbleiterschalter, insbesondere Feldeffekttransistoren, Bipolartransistoren, IGBT, Thyristoren oder als Dioden etc. ausgebildet sein. Die Halbleiterschalter können beispielsweise mittels einer Pulsweitenmodulation angesteuert werden.

In einer Ausführungsform wird das Verfahren zum Betrieb eines zur Gleichrichtung oder Umrichtung einer Wechselspannung mit drei Phasen ausgebildeten elektronischen Moduls verwendet.

In einer Ausführungsform umfasst das elektronische Modul mindestens sechs Halbleiterelemente, die in drei Halbbrücken mit jeweils einem oberen Zweig und einem unteren Zweig angeordnet sind.

In einer Ausführungsform werden bei Defekt eines der Halbleiterelemente im oberen Zweig in einer der Halbbrücken die beiden Halbleiterelemente im oberen Zweig der anderen beiden Halbbrücken gezielt angesteuert, um das defekte Halbleiterelement oder die diesem zugeordnete Schwachstelle zu zerstören oder aufzutrennen, wobei bei Defekt eines der Halbleiterelemente im unteren Zweig in einer der Halbbrücken die beiden Halbleiterelemente im unteren Zweig der anderen beiden Halbbrücken gezielt angesteuert werden, um das defekte Halbleiterelement oder die diesem zugeordnete Schwachstelle zu zerstören oder aufzutrennen.

In einer Ausführungsform erfolgt die gezielte Ansteuerung der beiden Halbleiterelemente zu einem Zeitpunkt, an dem an den jeweils nicht vom defekten Halbleiterelement betroffenen Phasen die gleichen Spannungsverhältnisse gegenüber der vom defekten Halbleiterelement betroffenen Phase vorliegen oder innerhalb eines Toleranzbereichs um den genannten Zeitpunkt, in dem die genannten Spannungsverhältnisse weitgehend gleich sind, insbesondere bei einem Spannungsunterschied von weniger als 4 Volt zwischen den nicht vom defekten Halbleiterelement betroffenen Phasen gegenüber der vom defekten Halbleiterelement betroffenen Phase.

In einer Ausführungsform werden die beiden Halbleiterelemente an den jeweils nicht vom defekten Halbleiterelement betroffenen Phasen zu dem genannten Zeitpunkt eingeschaltet, so dass ein Kurzschlussstrom fließt, der sich auf die beiden Halbleiterelemente aufteilt, während über das defekte Halbleiterelement der komplette Kurzschlussstrom fließt. Damit wird erreicht, das defekte Halbleiterelement oder die diesem zugeordnete Schwachstelle vollständig zu zerstören oder aufzutrennen und die übrigen Halbleiterelemente dabei betriebsfähig zu erhalten.

In einer Ausführungsform wird die gezielte Ansteuerung der beiden Halbleiterelemente bis zur Zerstörung oder Auftrennung des defekten Halbleiterelements oder der diesem zugeordneten Schwachstelle wiederholt, insbesondere dann, wenn es bei einmaliger Ansteuerung nicht zur beabsichtigten Zerstörung oder Auftrennung kommt. Daher wird der Vorgang unter gleichen Bedingungen solange wiederholt, bis die beabsichtigte Zerstörung oder Auftrennung eintritt, so dass kein Kurzschlussstrom durch das defekte Halbleiterelement mehr fließt.

Eine Vorrichtung gemäß einem Aspekt der vorliegenden Erfindung umfasst ein elektronisches Modul, umfassend mindestens drei Halbleiterelemente, und eine Steuereinrichtung, die zur Detektion von Defekten der Halbleiterelemente und zur Durchführung des Verfahrens nach einem der vorhergehenden Ansprüche ausgebildet ist, um ein defektes Halbleiterelement oder eine diesem zugeordnete Schwachstelle zu zerstören oder aufzutrennen.

In einer Ausführungsform ist die Schwachstelle als ein Bonddraht des Halbleiterelements ausgebildet, der so dimensioniert ist, dass er einen vorgegebenen Betriebsstrom und einen innerhalb einer vorgegebenen Grenze darüber hinausgehenden Strom, tragen kann, nicht jedoch einen Kurzschlussstrom oder einen wiederholt angelegten Kurzschlussstrom.

In einer Ausführungsform ist die Schwachstelle alternativ oder zusätzlich als eine Verjüngung einer Kupferschicht an einem Anschluss des Halbleiterelements auf einer Leiterplatte (insbesondere DCB oder PCB) ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 ist ein schematisches Schaltbild eines Moduls mit mehreren Halbleiterelementen, und
FIG 2 ist ein schematisches Diagramm einer dreiphasigen Wechselspannung.

Einander entsprechende Teile sind in den Figuren mit denselben Bezugszeichen versehen.

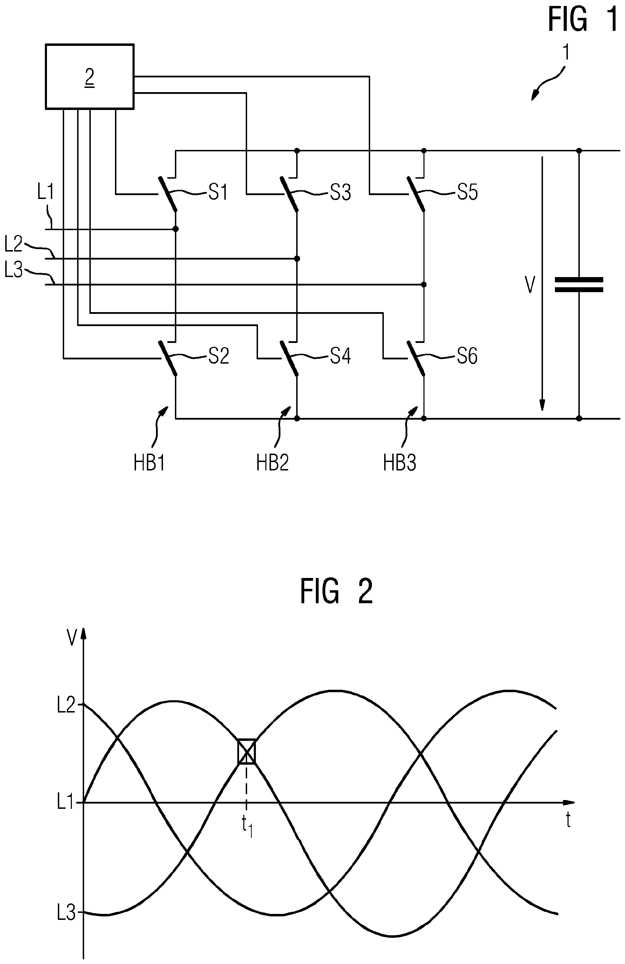

Figur 1 ist ein schematisches Schaltbild eines Moduls 1, beispielsweise eines Umrichtermoduls, mit mehreren Halbleiterelementen S1 bis S6, die mittels einer Steuereinrichtung 2 gezielt ansteuerbar sind. Das Modul 1 ist beispielsweise als ein Umrichtermodul zum Umrichten einer dreiphasigen Wechselspannung mit den Phasen L1, L2 und L3 zunächst in eine Gleichspannung V ausgebildet. In diesem Fall sind die Halbleiterelemente S1 bis S6 beispielsweise als Halbleiterschalter, insbesondere Feldeffekttransistoren, Bipolartransistoren, IGBT, Thyristoren oder als Dioden etc. ausgebildet und in drei Halbbrücken HB1 bis HB3 angeordnet. Die Halbleiterschalter können beispielsweise mittels einer Steuereinrichtung 2 angesteuert werden, die eine Pulsweitenmodulation durchführt.

Ist eines der Halbleiterelemente S1 bis S6, beispielsweise das Halbleiterelement S3 im oberen Zweig der Halbbrücke HB2, in einem herkömmlichen Modul 1 defekt, so ist ein Weiterbetrieb des Moduls 1 nicht möglich. Dadurch können erhebliche Ausfallkosten entstehen.

Gemäß der vorliegenden Erfindung kann im Modul 1 gezielt eine Schwachstelle für das Halbleiterelement S3, insbesondere je eine Schwachstelle für jedes der Halbleiterelemente S1 bis S6, vorgesehen sein. Alternativ oder zusätzlich kann mittels einer gezielten Modulation ein defektes Halbleiterelement S1 bis S6, beispielsweise das Halbleiterelement S3, außer Betrieb gesetzt werden. Auf diese Weise bleibt ein Teilbetrieb des Moduls 1 möglich. Im Folgenden wird beschrieben, wie die Modulation erfolgt.

Figur 2 ist ein schematisches Diagramm der an den Phasen L1, L2, L3 anliegenden dreiphasigen Wechselspannung, wobei die Spannung V über der Zeit t dargestellt ist. Das defekte Halbleiterelement S3 dient zusammen mit dem Halbleiterelement S4 der Gleichrichtung der Wechselspannung der Phase L2. Zu einem Zeitpunkt t1 liegen an den Halbleiterelementen S1 und S5 im oberen Zweig der Halbbrücken HB1 und HB3, das heißt an den Phasen L1 und L3 die gleichen Spannungsverhältnisse gegenüber L2 und damit gegenüber dem defekten Halbleiterelement S3 vor. Die Halbleiterelemente S1 und S5 werden zum Zeitpunkt t1 oder innerhalb eines Toleranzbereichs um den Zeitpunkt t1, in dem die genannten Spannungsverhältnisse weitgehend gleich sind, eingeschaltet, so dass ein Kurzschlussstrom fließt, der sich auf die Halbleiterelemente S1 und S5 aufteilt, während über das defekte Halbleiterelement S3 der komplette Kurzschlussstrom fließt. Dabei ist das Ziel, das defekte Halbleiterelement S3 oder eine diesem zugeordnete Schwachstelle vollständig zu zerstören oder aufzutrennen und die übrigen Halbleiterelemente S1, S2, S4 bis S6 dabei betriebsfähig zu erhalten. Kommt es bei dieser Einschaltung nicht zur beabsichtigten Zerstörung oder Auftrennung, so kann der Vorgang unter gleichen Bedingungen so lange wiederholt werden, bis die beabsichtigte Zerstörung oder Auftrennung eintritt, so dass kein Kurzschlussstrom durch das defekte Halbleiterelement S3 mehr fließt. Mit dem so unterbrochenen Halbleiterelement S3 kann das Modul 1 zunächst weiterbetrieben werden, gegebenenfalls nicht mit voller Leistung, da nicht alle Schaltmuster geschaltet werden können. Ein Teillastbetrieb bleibt jedoch möglich.

Die Schwachstelle kann beispielsweise ein Bonddraht des Halbleiterelements S1 bis S6 sein, der so dimensioniert ist, dass er einen vorgegebenen Betriebsstrom und einen innerhalb einer vorgegebenen Grenze darüber hinausgehenden Strom, beispielsweise ein bestimmtes Vielfaches des vorgegebenen Betriebsstroms, tragen kann, nicht jedoch den Kurzschlussstrom oder den wiederholt angelegten Kurzschlussstrom. Ebenso kann die Schwachstelle als eine Verjüngung einer Kupferschicht am Anschluss des Halbleiterelements S1 bis S6 auf einer Leiterplatte (insbesondere DCB oder PCB) ausgebildet sein.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betrieb eines elektronischen Moduls (1) umfassend mindestens drei Halbleiterelemente (S1 bis S6), wobei bei Defekt eines der Halbleiterelemente (S1 bis S6) mittels einer gezielten Ansteuerung von mindestens zweien der übrigen Halbleiterelemente (S1 bis S6) ein Strom über das defekte Halbleiterelement (S1 bis S6) geleitet wird, um das defekte Halbleiterelement (S1 bis S6) oder eine diesem zugeordnete Schwachstelle zu zerstören oder aufzutrennen, wobei dieser Strom auf die gezielt angesteuerten Halbleiterelemente (S1 bis S6) aufgeteilt wird.

2. Verfahren nach Anspruch 1, das zum Betrieb eines zur Gleichrichtung oder Umrichtung einer Wechselspannung mit drei Phasen (L1, L2, L3) ausgebildeten elektronischen Moduls (1) verwendet wird.

3. Verfahren nach einem der Ansprüche 1 oder 2, wobei das elektronische Modul (1) mindestens sechs Halbleiterelemente (S1 bis S6) umfasst, die in drei Halbbrücken (HB1 bis HB3) mit jeweils einem oberen Zweig und einem unteren Zweig angeordnet sind.

4. Verfahren nach Anspruch 3, wobei bei Defekt eines der Halbleiterelemente (S1, S3, S5) im oberen Zweig in einer der Halbbrücken (HB1 bis HB3) die beiden Halbleiterelemente (S1, S3, S5) im oberen Zweig der anderen beiden Halbbrücken (HB1 bis HB3) gezielt angesteuert werden, um das defekte Halbleiterelement (S1, S3, S5) oder die diesem zugeordnete Schwachstelle zu zerstören oder aufzutrennen, wobei bei Defekt eines der Halbleiterelemente (S2, S4, S6) im unteren Zweig in einer der Halbbrücken (HB1 bis HB3) die beiden Halbleiterelemente (S2, S4, S6) im unteren Zweig der anderen beiden Halbbrücken (HB1 bis HB3) gezielt angesteuert werden, um das defekte Halbleiterelement (S2, S4, S6) oder die diesem zugeordnete Schwachstelle zu zerstören oder aufzutrennen.

5. Verfahren nach Anspruch 4, wobei die gezielte Ansteuerung der beiden Halbleiterelemente (S1 bis S6) zu einem Zeitpunkt (t1) erfolgt, an dem an den jeweils nicht vom defekten Halbleiterelement (S1 bis S6) betroffenen Phasen (L1 bis L3) die gleichen Spannungsverhältnisse gegenüber der vom defekten Halbleiterelement (S1 bis S6) betroffenen Phase (L1 bis L3) vorliegen oder innerhalb eines Toleranzbereichs um diesen Zeitpunkt (t1), in dem die genannten Spannungsverhältnisse weitgehend gleich sind.

6. Verfahren nach Anspruch 5, wobei die beiden Halbleiterelemente (S1 bis S6) an den jeweils nicht vom defekten Halbleiterelement (S1 bis S6) betroffenen Phasen (L1 bis L3) zum Zeitpunkt (t1) eingeschaltet werden, so dass ein Kurzschlussstrom fließt, der sich auf die beiden Halbleiterelemente (S1 bis S6) aufteilt, während über das defekte Halbleiterelement (S1 bis S6) der komplette Kurzschlussstrom fließt.

7. Verfahren nach einem der vorhergehenden Ansprüche, wobei die gezielte Ansteuerung der beiden Halbleiterelemente (S1 bis S6) bis zur Zerstörung oder Auftrennung des defekten Halbleiterelements (S1 bis S6) oder der diesem zugeordneten Schwachstelle wiederholt wird.

8. Vorrichtung, umfassend ein elektronisches Modul (1), umfassend mindestens drei Halbleiterelemente (S1 bis S6), und eine Steuereinrichtung (2), die zur Detektion von Defekten der Halbleiterelemente (S1 bis S6) und zur Durchführung des Verfahrens nach einem der vorhergehenden Ansprüche ausgebildet ist, um ein defektes Halbleiterelement (S1 bis S6) oder eine diesem zugeordnete Schwachstelle zu zerstören oder aufzutrennen.

9. Vorrichtung nach Anspruch 8, wobei die Schwachstelle als ein Bonddraht des Halbleiterelements (S1 bis S6) ausgebildet ist, der so dimensioniert ist, dass er einen vorgegebenen Betriebsstrom und einen innerhalb einer vorgegebenen Grenze darüber hinausgehenden Strom tragen kann, nicht jedoch einen Kurzschlussstrom oder einen wiederholt angelegten Kurzschlussstrom.

10. Vorrichtung nach Anspruch 8 oder 9, wobei die Schwachstelle als eine Verjüngung einer Kupferschicht an einem Anschluss des Halbleiterelements (S1 bis S6) auf einer Leiterplatte ausgebildet ist.
